# FASCICULE DE BREVET EUROPEEN

(11) **EP 3 365 304 B1**
(45) Date de publication et mention de la délivrance du brevet: **14.08.2019**
(21) Numéro de dépôt: 16806214.9
(22) Date de dépôt: 19.10.2016
(51) Int. Cl.: C04B 35/117, C04B 35/119, C04B 35/18, C04B 35/48, C04B 35/482, C04B 35/66

(54) **GRAINS FONDUS DE ZIRCONE - SPINELLE ET PRODUIT REFRACTAIRE OBTENU A PARTIR DESDITS GRAINS**
KONDENSIERTE SPINELL-ZIRKONIA-KÖRNER UND AUS DIESEN KÖRNERN HERGESTELLTES FEUERFESTES PRODUKT
FUSED SPINEL-ZIRCONIA GRAINS AND REFRACTORY PRODUCT OBTAINED FROM SAID GRAINS

(30) Priorité: 19.10.2015 FR 1559926; 19.10.2015 FR 1559925
(43) Date de publication de la demande: 29.08.2018
(73) Titulaire: Saint-Gobain Centre de Recherches et d'Etudes Europeen, 92400 Courbevoie (FR)
(72) Inventeur: RAFFY, Stéphane, 84300 Cavaillon (FR); NAHAS, Nabil, 13008 Marseille (FR)
(74) Mandataire: Saint-Gobain Recherche
(86) Numéro de dépôt international: PCT/FR2016/052700
(87) Numéro de publication internationale: WO 2017/068283

(56) Documents cités:
- CN-A- 1 546 421
- CN-A- 101 786 889
- FR-A1- 2 787 106
- US-A1- 2011 237 420
- MA Y L ET AL: "Yttria-magnesia partially stabilised zirconia reinforced with MgAl2O4 spinel particles", MATERIALS SCIENCE AND TECHNOLOGY, MANEY PUBLISHING, GB, vol. 14, no. 2, 1 février 1998 (1998-02-01), pages 139-142, XP009188138, ISSN: 0267-0836
- Joanna Mckittrick ET AL: "Non-stoichiometry and defect structures in rapidly solidified MgO-Al 2 O 3 -ZrO 2 ternary eutectics", Materials Science and Engineering A231, 1 janvier 1997 (1997-01-01), pages 90-97, XP055243906, Extrait de l'Internet: URL:http://ac.els-cdn.com/S092150939700064 6/1-s2.0-S0921509397000646-main.pdf?_tid=d 3e31fb4-c0ea-11e5-85d6-00000aacb360&acdnat =1453455231_f32612d199a2e4781bec744e832445 32
- GUANGLIANG YUAN ET AL: "Effects of in-situ formation of magnesium aluminate spinel on performance of modified sizing nozzle", ADVANCED MATERIALS RESEARCH, TRANS TECH PUBLICATIONS LTD, CH, vol. 750-752, 1 janvier 2014 (2014-01-01), pages 1130-1136, XP009188128, ISSN: 1022-6680
- ZHANG Q ET AL: "Thermal Stability and Microstructural Development of Fine-grained (Y,Mg)-PSZ/MgAl2O4 Ceramics", JOURNAL OF THE EUROPEAN CERAMIC SOCIETY, ELSEVIER SCIENCE PUBLISHERS, BARKING, ESSEX, GB, vol. 18, no. 6, 1 juin 1998 (1998-06-01), pages 647-651, XP004121109, ISSN: 0955-2219, DOI: 10.1016/S0955-2219(97)00178-7
- N. NITANI ET AL: "Thermophysical properties of rock-like oxide fuel with spinel-yttria stabilized zirconia system", JOURNAL OF NUCLEAR MATERIALS, vol. 274, no. 1-2, 1 août 1999 (1999-08-01), pages 15-22, XP055243901, NL ISSN: 0022-3115, DOI: 10.1016/S0022-3115(99)00077-X

## Description

L'invention se rapporte à des grains fondus pour applications céramiques constitués majoritairement de zircone et de spinelle. L'invention se rapporte également à un procédé de fabrication de tels grains, ainsi qu'à des matériaux et/ou produits céramiques constitués à partir desdits grains ou comprenant ceux-ci.

L'invention se rapporte également à l'utilisation de grains fondus pour la fabrication de produits réfractaires utilisés en particulier, mais pas uniquement, dans le domaine de la métallurgie, en particulier pour la fabrication de pièces réfractaires pour la fabrication ou la transformation de métaux ou alliages métalliques. Ils peuvent encore être utilisés comme revêtement pour des pièces métalliques ou encore dans les cas de contact entre une pièce céramique et un métal.

Les grains fondus selon l'invention sont ainsi utile pour la fabrication de produits ou matériaux réfractaires notamment du type de ceux utilisés en métallurgie.

Dans la suite de la description, par commodité et conformément aux habitudes dans le domaine des céramiques, on décrira lesdits oxydes comprenant les éléments Al, Mg et Zr (ou autres) par référence aux oxydes simples correspondants, c'est à dire Al₂O₃, MgO, ZrO₂. Ainsi, dans la description qui suit, sauf mention contraire, les proportions des différents éléments dans les compositions chimiques globales des grains selon l'invention sont données par référence au poids des oxydes simples correspondants, rapportés en pourcentage poids par rapport à la totalité des oxydes présents dans lesdits grains, même si ceux-ci ne sont pas nécessairement présents sous cette forme simple dans lesdits grains. Par opposition on désigne dans la présente description une composition réellement présente d'un oxyde dans lesdits grains par « phase » ou « phase oxyde ».

Dans la suite de la description, sans pour autant y être limité, on décrit plus particulièrement l'utilisation des grains selon l'invention et leurs avantages dans le domaine spécifique des produits réfractaires utilisés en métallurgie, c'est-à-dire pour l'élaboration des métaux ou alliages métalliques, en particulier pour la réalisation de collerette de busettes de coulée ou comme insert dans des plaques à tiroir. Il est cependant bien entendu que de tels grains, par les avantages qu'ils procurent, sont susceptibles d'être utilisés avantageusement dans de nombreuses autres applications du domaine des céramiques, notamment dans tout domaine pour lequel une forte stabilité thermique et résistance à la corrosion, notamment à des températures supérieures à 1000°C, sont recherchées.

En particulier, de nombreuses zones de fours de fabrication ou de traitement des métaux ou de leurs alliages nécessitent l'utilisation de produits réfractaires résistants aux hautes températures.

Par exemples, les plaques tiroirs, ou « slide gates » selon le terme anglais, sont des pièces utilisées lors d'une coulée continue de l'acier pour ouvrir ou fermer des répartiteurs ou des orifices d'évacuation de poches de coulée en communication de fluide, via une buse coulissante (« sliding nozzle » en anglais), avec des lingotières.

Les busettes de coulée et les plaques à tiroir comportent actuellement des parties constituées de zircone, le plus souvent partiellement stabilisée.

La demande de brevet CN101786889 décrit par exemple des busettes constituées à partir de briques comprenant de 12 à 87% de zircone, 10 à 85 % d'un spinelle magnésium-aluminium et 3 à 15% d'un matériau supplémentaire choisi parmi le corindon, le zircon, la mullite ou leurs mélanges, en combinaison avec un liant organique.

Les briques élémentaires sont obtenues par frittage à une température supérieure à 1400°C d'un mélange initial de spinelle, d'oxyde de zirconium de pureté supérieure à 94% et du matériau supplémentaire précédemment décrit.

Les travaux menés par la société déposante ont cependant montré que de tels produits pouvaient, au fur et à mesure de leur utilisation, perdre de leur propriétés initiales de résistance en température et en particulier présenter des fissurations nécessitant leur remplacement.

Tout particulièrement, selon les recherches mesurées par la société déposante, il semble que cette diminution de la durabilité est directement liée à des modifications structurelles du matériau constituant le réfractaire, et plus particulièrement à la transformation cristallographique de l'oxyde de zirconium, même partiellement stabilisé, au cours des cycles de température successifs auxquels il est soumis. En particulier, il a été constaté par la société déposante une transformation progressive de la forme cubique ou tétragonale de la zircone, même lorsque celle-ci est partiellement stabilisée, vers la forme monoclinique.

De façon connue, une telle transformation, de type martensitique, entraîne une microfissuration des grains constitutifs et par suite une dégradation du matériau lors de son retour à plus basse température.

Il existe ainsi encore à l'heure actuelle un besoin pour des matières premières (notamment sous formes de grains) pour la fabrication de tels matériaux réfractaires, notamment dans le domaine de la métallurgie, qui permettent d'améliorer après mise en forme la stabilité thermique desdits matériaux réfractaires.

Le but de la présente invention est de répondre à un tel besoin, c'est-à-dire de fournir des matières premières, sous forme de grains, qui permettent d'obtenir, après leur mise en forme, des matériaux présentant une résistance améliorée aux variations de température imposées par leur utilisation notamment pour le coulage des métaux, ainsi qu'une plus grande durée de vie.

La présente invention se rapporte à des grains fondus, notamment sous forme individualisée ou encore sous forme de poudre, dans lesquels :
- lesdits grains comprennent une matrice de l'eutectique zircone-spinelle enrobant des inclusions constituées essentiellement d'une phase zircone ou d'une phase spinelle,
- lesdits grains présentent la composition chimique globale suivante, en pourcentages poids exprimés sous la forme d'oxydes :
   ∘ plus de 45,0% et moins de 95,0% de ZrO₂,
   ∘ plus de 3,0% et moins de 40,0% d'Al₂O₃,
   ∘ plus de 1,0% et moins de 20,0% de MgO,
   ZrO₂, Al₂O₃ et MgO représentant ensemble au moins 95,0% du poids desdits grains.

Dans la présente description, sauf expressément autrement spécifié, tous les pourcentages sont donnés en poids.

Selon certains modes préférés de réalisation des grains fondus selon la présente invention, qui peuvent bien évidemment être combinés entres eux le cas échéant :
- Lesdits grains sont constitués essentiellement d'une phase zircone et d'un oxyde de magnésium et d'aluminium de structure spinelle.
- La composition chimique comprend plus de 68% poids de ZrO₂.
- Ladite composition chimique comprend moins de 25% poids d'Al₂O₃ .
- le rapport massique Al₂O₃/MgO est compris entre 1,0 et 5,0, de préférence est compris entre 1,5 et 3.
- ZrO₂, Al₂O₃ et MgO représentent ensemble plus de 98,0% du poids desdits grain.
- Les grains fondus selon l'invention comprennent en outre, sur la base de l'oxyde, plus de 0,2% poids d'Y₂O₃.
- Les grains fondus selon l'invention comprennent en outre, sur la base de l'oxyde moins de 4% poids d'Y₂O₃.
- Les grains fondus selon l'invention comprennent en outre, sur la base de l'oxyde, plus de 0,2% poids de CaO.
- Les grains fondus selon l'invention comprennent en outre, sur la base de l'oxyde moins de 4% poids de CaO.
- Plus de 50% des inclusions constituées essentiellement d'oxyde de zirconium, présentent une plus grande dimension inférieure à 500 micromètres.
- Les grains fondus selon l'invention comprennent moins de 5% poids, de préférence moins de 3% poids, d'une phase additionnelle d'alumine.
- Les grains fondus selon l'invention comprennent moins de 5% poids, de préférence moins de 3% poids, d'une phase additionnelle de magnésie.
- La (ou les) phase(s) spinelle représente (nt) entre 5% et 50%, en poids, desdits grains.
- L'eutectique ZrO₂-spinelle représente entre 10% et 80%, en volume, desdits grains, par exemple entre 20 et 70% en volume, desdits grains.
- Lesdits grains fondus comprennent une matrice de l'eutectique zircone-spinelle enrobant des inclusions constituées essentiellement d'une phase zircone.
- La composition chimique des grains comprend moins de 92% de ZrO₂, de préférence encore moins de 90% de ZrO₂.
- La composition chimique des grains comprend plus de 70% de ZrO₂, de préférence encore plus de 72% de ZrO₂, voire plus de 75%, voire plus de 80% de ZrO₂, voire plus de 85% de ZrO₂.
- La composition chimique des grains comprend moins de 20% d'Al₂O₃, voire moins de 18%, voire encore moins de 15% ou même moins de 12% d'Al₂O₃.
- La composition chimique des grains comprend plus de 7% d'Al₂O₃, voire plus de 10% d'Al₂O₃.
- La composition chimique des grains comprend moins de 13% de MgO, voire moins de 12% de MgO, voire même moins de 10% de MgO.
- La composition chimique des grains comprend plus de 2% de MgO, voire plus de 4%, voire plus de 5% ou même plus de 7%.
- La composition chimique des grains fondus selon l'invention comporte en outre plus de 0,2%, voire plus de 0,5%, voire plus de 1,0% d'Y₂O₃.
- La composition chimique des grains fondus selon l'invention comporte en outre moins de 4,0%, voire moins de 3,0%, voire moins de 2,0% d'Y₂O₃.
- La composition chimique des grains fondus selon l'invention comporte en outre plus de 0,2%, voire plus de 0,5%, voire plus de 1,0% de CaO.
- La composition chimique des grains fondus selon l'invention comporte en outre moins de 4,0%, voire moins de 3,0%, voire moins de 2,0% de CaO.
- La composition chimique des grains fondus selon l'invention comporte en outre moins de 2,0%, voire moins de 1,5%, voire moins de 1,0%, voire moins de 0,5%, voire moins de 0,4% de silice SiO₂.
- Les grains fondus comprennent une phase zircone, et une phase spinelle, ces deux phases représentant ensemble plus de 80%, de préférence plus de 90% voire plus de 95% du poids des grains selon l'invention.
- La ou les phase (s) zircone comprennent plus de 90% en poids d'équivalent ZrO₂, voire plus de 95% de ZrO₂, ou encore plus de 98% de ZrO₂. Par « phases zircone » on entend la somme d'au moins la zircone présente dans les inclusions et de la zircone présente dans l'eutectique.
- La ou les phase(s) zircone des inclusions comprennent en outre plus de 1%, voire plus de 2%, voire plus de 3% poids de MgO.
- La ou les phase(s) zircone des inclusions est majoritairement, voire principalement sous forme cubique. Par majoritairement, on entend plus de 50% poids, voire plus de 60% poids. Par principalement, on entend plus de 80% poids, voire plus de 90% poids.
- Ladite ou lesdites phases zircone représentent plus de 68%, voire plus de 70%, voire plus de 80%, voire plus de 85%, voire plus de 90% du poids des grains selon l'invention. Comme précédemment décrit, par « phases zircone » on entend la somme d'au moins la zircone présente dans les inclusions et de la zircone présente dans l'eutectique.
- Ladite ou lesdites phases zircones représentent moins de 95%, voire moins de 92%, voire moins de 90% du poids des grains selon l'invention, voire moins de 85% ou encore moins de 80% du poids des grains selon l'invention.
- La ou les phases spinelle représentent plus de 5%, voire plus de 7%, voire plus de 10%, voire plus de 15%, voire plus de 20% du poids des grains selon l'invention. Par « phases spinelle » on entend la somme d'au moins la spinelle présente dans l'eutectique et le cas échéant du spinelle présente dans les inclusions.
- La ou les phases spinelle représentent moins de 50%, voire moins de 45%, voire moins de 40% du poids des grains selon l'invention.
- une phase additionnelle d'alumine est présente et représente moins de 5%, voire moins de 3%, voire moins de 1% du poids des grains selon l'invention.
- une phase additionnelle d'oxyde de magnésium est présente et représente moins de 10%, voire moins de 5%, voire moins de 3% des grains selon l'invention.

Les pourcentages massiques tels que reportés précédemment des différentes phases cristallines présentes dans les grains fondus selon l'invention, en particulier de zircone (sous leurs différentes formes) et de spinelle, peuvent être classiquement mesurées par diffraction des rayons et analyse Rietveld.

L'invention concerne également un procédé de fabrication de grains fondus tels que décrits précédemment, comprenant les étapes suivantes :
a) mélange de matières premières pour former une charge de départ,
b) fusion de la charge de départ jusqu'à obtention d'un liquide en fusion,
c) refroidissement dudit liquide en fusion de manière que le liquide fondu soit entièrement solidifié jusqu'à obtention d'une masse solide,
d) division, notamment par broyage, de ladite masse de manière à obtenir un mélange de grains.

Selon l'invention, les étapes c) et d) précédemment décrites ne sont pas forcément effectuées dans cet ordre. L'ordre des étapes c) et d) dépend en particulier de la technique utilisée pour l'obtention des grains. Par exemple, on procèdera d'abord à l'étape c), par exemple en utilisant des moules CS tels que décrits dans le brevet US 3,993,119, puis à l'étape d) dans le cas où la division de la masse fondue consiste en un broyage. Alternativement, on procèdera d'abord à l'étape d) puis à l'étape c) dans le cas où la division de la masse fondue consiste en un moulage tel que par exemple décrit dans la demande WO2012/045302.

Selon l'invention, les matières premières sont choisies à l'étape a) de manière que les grains obtenus finalement soient conformes à l'invention.

Tout procédé conventionnel de fabrication de grains fondus peut être mis en oeuvre, pourvu que la composition de la charge de départ permette d'obtenir des grains présentant une composition conforme à celle des grains selon l'invention.

A l'étape b), on utilise de préférence un four à arc électrique, mais tous les fours connus sont envisageables, comme un four à induction ou un four à plasma, pourvu qu'ils permettent de faire fondre complètement la charge de départ. La cuisson est de préférence effectuée dans des conditions neutres, par exemple sous argon, ou oxydantes, de préférence à pression atmosphérique.

A l'étape c), le liquide en fusion est de préférence refroidi de manière lente, par exemple en une à plusieurs heure (s), jusqu'à obtention d'une masse solide la masse solide.

A l'étape d), la masse solide est broyée selon des techniques conventionnelles, jusqu'à l'obtention d'une granulométrie adaptée à son utilisation ultérieure.

Ladite charge de départ peut également comprendre des impuretés inévitables.

Par « impuretés », on entend les constituants inévitables introduits nécessairement avec les matières premières ou résultant de réactions avec ces constituants. Les impuretés peuvent en particulier être introduites lors de l'étape préliminaire de fabrication des grains fondus. Les impuretés ne sont pas des constituants nécessaires, mais seulement tolérés. On considère qu'une teneur totale en impuretés inférieure à 2%, de préférence inférieure à 1%, ne modifie pas substantiellement les résultats obtenus.

L'invention concerne également des produits réfractaires, notamment pour une utilisation dans le domaine de la métallurgie, susceptibles d'être obtenus par frittage ou consolidation de matières premières comportant ou constitué par les grains fondus selon l'invention.

L'invention concerne en particulier, des produits réfractaires obtenus par frittage ou consolidation de matières premières comportant ou constituées par les grains fondus selon l'invention, lesdits grains étant frittés ou consolidés ensemble, notamment sous forme de briques, pour constituer lesdits matériaux réfractaires.

En particulier, l'utilisation des matériaux ou produits réfractaires selon l'invention trouve ainsi plus particulièrement son application dans le domaine de la métallurgie, lesdits produits ou matériaux pouvant être avantageusement obtenus par frittage ou consolidation de matières premières comprenant ou constituées des grains fondus précédemment décrits.

L'invention concerne également des produits réfractaires et leur une utilisation dans le domaine de la métallurgie, susceptibles d'être obtenus par frittage de matières premières résultant de ladite utilisation de grains fondus.

Dans un mode alternatif de réalisation de l'invention, l'invention concerne des produits réfractaires, et en particulier leur utilisation dans le domaine de la métallurgie, lesdits produits étant obtenus par frittage ou consolidation de matières premières comportant une poudre de zircone et une poudre de grains fondus selon l'invention, ladite poudre de zircone et ladite poudre de grains fondus représentant ensemble plus de 90% poids desdites matières premières, voire plus de 95% poids desdites matières premières.

On donne les définitions suivantes :
Par matériau réfractaire, on entend, conformément à la norme ISO 836:2001 (point 107), un matériau ou produit non métallique (mais n'excluant pas les matériaux ou les produits contenant une certaine proportion de métal) dont les propriétés chimiques et physiques permettent son emploi dans un environnement à haute température. Par exemple de telles hautes températures peuvent être supérieures à 600°C, notamment supérieures à 800°C, voire supérieures à 1000°C.

On appelle de façon générale « zircone » l'oxyde de zirconium ZrO₂; il comprend le plus souvent une faible quantité d'oxyde d'hafnium HfO₂, sous forme d'impureté inévitable, cette quantité pouvant aller jusqu'à 2% de la quantité totale de zircone. Dans la composition chimique globale des grains selon l'invention, notamment telle que précédemment décrite, les pourcentages « ZrO₂ » correspondent en particulier à la quantité sommée d'oxyde de zirconium et de l'impureté inévitable HfO₂.

Par opposition, on appelle « phase zircone » ou « phase d'oxyde de zirconium » une phase constituée de zircone (y compris les impuretés inévitables, notamment HfO₂), ou de zircone partiellement ou entièrement stabilisée, notamment par du magnésium ou de l'yttrium.

On appelle « spinelle » les composés formés par la réaction entre l'oxyde de magnésium et l'alumine, souvent exprimés sous la forme MgAl₂O₄, et dont la structure cristallographique peut se décrire comme un empilement de type cubique d'ions O²⁻ dans lequel la moitié des sites octaédriques sont occupés par les cations Al et le quart des sites tétraédriques occupés par les cations Mg. Une telle structure cristallographique peut également accepter un excès de cations Al ou Mg en solution solide tout en restant un composé « spinelle » au sens de la présente invention.

Autrement dit, une phase de spinelle dans un grain fondu selon la présente invention peut s'éloigner sensiblement de la formulation spinelle classique MgAl₂O₄, c'est-à-dire d'une stoechiométrie 1:1 du rapport molaire entre Al₂O₃ et MgO.

On appelle « eutectique zircone-spinelle » une microstructure obtenue à partir du point eutectique correspondant, dans le diagramme pseudo-ternaire ZrO₂/MgAl₂O₄, à un point de composition voisin de 59% molaire de zircone et de 41% molaire de spinelle MgAl₂O₄, et dont la température de fusion est voisine de 1830°C (point invariant du diagramme de phase pour lequel la réaction liquide vers solide est complète).

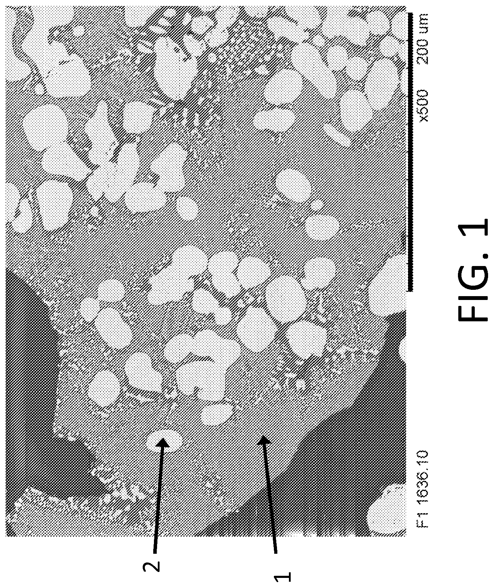

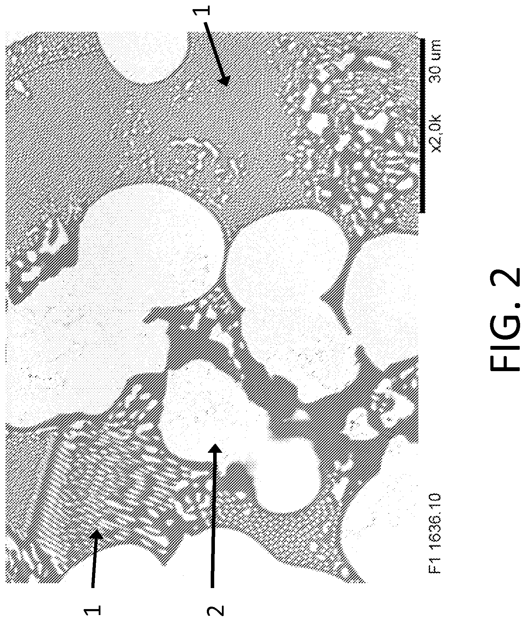

La structure cristallographique d'un tel eutectique est visible sur les deux clichés de microscopie électronique reportés sur les figures 1 et 2 ci-jointes.

La figure 1 est un premier cliché de microscopie électronique de la microstructure d'un grain fondu selon l'invention.

La figure 2 est un premier cliché de microscopie électronique de la microstructure du même grain fondu que sur la figure 1, mais à plus fort grossissement.

A très fort grossissement (figure 2), on observe que la matrice faite de la composition eutectique précédente et présentant une structure cristallographique dans laquelle la phase de zircone est dispersée très finement, sous forme de bâtonnets ou de fibres, dans la phase spinelle. Une telle structure est caractéristique d'une phase eutectique obtenue à partir de deux types cristallins.

On appelle « grains fondus » des grains obtenus par un procédé de fabrication comportant au moins une étape de fusion, une étape de solidification et une étape de division, notamment par broyage, par moulage ou tout autre moyen connu équivalent.

Une poudre selon l'invention est un ensemble de grains selon l'invention, dont la granulométrie est adaptée à une utilisation particulière.

Autrement dit, une utilisation selon l'invention est généralement mise en oeuvre à partir d'une poudre constituée par un ensemble de grains tels que décrits précédemment, dont la granulométrie est adaptée à la fabrication dudit matériau réfractaire.

On appelle « fusion » d'un mélange de précurseurs ou d'oxydes, un traitement thermique à une température suffisamment importante pour que tous les constituants du mélange se retrouvent à l'état fondu (liquide).

De façon classique dans le domaine des céramiques, on appelle « frittage » d'un ensemble de grains, un traitement thermique permettant la jonction et le développement de leurs interfaces de contact par mouvement des atomes à l'intérieur et entre les grains, au sens indiqué dans la norme ISO 836:2001 (point 120).

Selon l'invention, la température de frittage des grains fondus est normalement comprise entre 1100°C et 1500°C, notamment entre 1300° et 1500°C.

Alternativement, on entend par consolidation un traitement thermique des grains à une température plus modérée propre à la simple mise en forme d'une pièce céramique, sans liaisons fortes cependant entre les interfaces des grains, par opposition au procédé de frittage précédemment décrit, la liaison pouvant être assurée par un liant, par exemple une résine phénolique.

Selon l'invention, la température de consolidation des grains fondus est normalement comprise entre 500°C et 1100°C, notamment entre 600°C et 1000°C.

La taille des grains est mesurée selon les techniques bien connues de granulométrie laser jusqu'à 20 micromètres puis par des techniques classiques de tamisage au-delà de 20 micromètres.

L'invention et ses avantages seront mieux compris à la lecture des exemples non limitatifs qui suivent. Dans les exemples, tous les pourcentages sont donnés en poids.

### Exemples :

L'exemple 1 comparatif est une poudre de zircone partiellement stabilisée à l'oxyde de magnésium. Cet exemple est caractéristique des matières premières utilisées aujourd'hui pour la fabrication d'éléments réfractaires dans le domaine de la métallurgie, notamment pour le coulage des aciers.

L'exemple 2 comparatif est un mélange de la poudre de zircone partiellement stabilisée utilisée dans l'exemple 1 avec une poudre de spinelle comportant environ 72% de Al₂O₃ et 28% de MgO, sans traitement thermique supplémentaire.

Les exemples 3 et 4 selon l'invention sont préparés à partir des proportions nécessaires des matières premières suivantes :
- Alumine AR75 comportant plus de 98% d'Al₂O₃, commercialisée par la société Alcan,
- MgO commercialisée par la société Altichem comportant plus de 98% de MgO,
- Zircone avec un taux de pureté supérieur à 98%.

Le mélange des réactifs initiaux ainsi obtenu selon les exemples 3 et 4 est électrofondu au four à arcs électriques, sous air. Le mélange fondu est coulé en lingot. Le lingot refroidi obtenu est broyé et tamisé pour obtenir une poudre de grains fondus dont le diamètre est similaire à celui des poudres utilisées dans les exemples 1 et 2.

Les échantillons selon les exemples 1 à 4 sont ensuite analysés. La composition chimique globale des grains, indiquée en pourcentages poids sur la base des oxydes, a été déterminée par fluorescence des rayons X. Les résultats sont regroupés dans le tableau 1 qui suit :

**Tableau 1**

| | zircone (ZrO₂+HfO₂) | Al₂O₃ | MgO | TiO₂ | SiO₂ | Fe₂O₃ | CaO |
|---|---|---|---|---|---|---|---|
| Exemple 1 (comparatif) | 95,8 | 0,2 | 3,3 | 0,1 | 0,1 | 0,1 | 0,2 |
| Exemple 2 (comparatif) | 68, 9 | 21,0 | 9,7 | 0,1 | 0,1 | 0,1 | 0,1 |
| Exemple 3 (invention) | 50,1 | 34,4 | 14,8 | 0,1 | 0,2 | 0,2 | 0,2 |
| Exemple 4 (invention) | 72,0 | 17,0 | 9,6 | 0,1 | 0,2 | 0,1 | 0,2 |

L'analyse qualitative des phases présentes dans les grains selon les exemples 1 à 4 est ensuite déterminée par diffraction des rayons X. Les résultats sont regroupés dans le tableau 2 qui suit :

**Tableau 2**

| | Phases détectées |
|---|---|
| Exemple 1 (comparatif) | zircone tétragonale ou cubique / zircone monoclinique |
| Exemple 2 (comparatif) | zircone tétragonale ou cubique / spinelle / zircone monoclinique |
| Exemple 3 (invention) | zircone cubique / spinelle / zircone monoclinique |
| Exemple 4 (invention) | zircone cubique / spinelle |

La résistance en température est évaluée en comparant les phases détectées avant et après avoir placé les échantillons des exemples 1 à 4 pendant 1 heure à 1400°C, c'est-à-dire à une température inférieure à la température de frittage minimale décrite dans la demande de brevet CN101786889, paragraphe [0012].

De telles conditions apparaissent également représentatives des conditions subies par un matériau constitué à partir des différents grains lors de son utilisation comme pièce réfractaire en métallurgie.

Comme indiqué précédemment, la résistance en température dudit matériau est liée au taux de transformation de la phase zircone depuis la forme cubique ou tétragonale vers la forme monoclinique lors d'un cycle comportant un montée et une descente en température, cette transformation entraînant de façon connue une microfissuration des grains constitutifs du matériau et par suite une dégradation des propriétés macroscopiques de celui-ci, comme expliqué précédemment.

Plus précisément, pour chaque exemple, on détermine le taux de zircone monoclinique par diffraction des rayons X avant et après le test. Les résultats sont regroupés dans le tableau 3 qui suit :

**Tableau 3**

| | Zircone monoclinique | |
|---|---|---|
| | Avant le test | Après le test |
| Exemple 1 (comparatif) | 46 % | 70 % |
| Exemple 2 (comparatif) | 29 % | 59 % |
| Exemple 3 (invention) | 6 % | 34 % |
| Exemple 4 (invention) | Non détectée | < 0,5 % |

Les résultats reportés dans le tableau 3 montrent que les grains fondus selon l'invention présentent une stabilité très améliorée par rapport aux exemples comparatifs. En réduisant les changements de phases, en particulier le passage de zircone cubique ou tétragonale à zircone monoclinique, on évite les variations dimensionnelles associées et ainsi les risques de fissuration des produits réfractaires comprenant ou constitués par ces grains.

La microstructure des grains obtenus selon l'exemple 4 a été observée par microscopie électronique.

La composition des différentes phases constituant les grains peut être obtenue par spectrométrie de longueur d'onde (microsonde de Castaing EPMA). Cette mesure permet de confirmer les observations visuelles et de préciser les compositions des différentes phases et inclusions observées sur les clichés de microscopie électronique des figures 1 et 2.

Les clichés sont reportés sur les figures 1 et 2. La microstructure, très différente de celles observées jusqu'ici sur des grains obtenus par frittage à l'état solide, présente deux régions très différentes et parfaitement observable au microscope :
- Une matrice (1) présentant une disposition alternée de phase zircone et de phase spinelle, sous forme de fibres ou de bâtonnets de très faible épaisseur. Cette microstructure très fine est caractéristique d'une phase eutectique obtenue à partir de deux types cristallins.
- Des occlusions (2) d'une phase zircone, enrobées dans ladite matrice de l'eutectique.

Sans que cette explication puisse être considérée comme définitive, la stabilisation de la zircone observée pourrait donc être liée à cette microstructure particulière obtenue grâce à la composition chimique globale en les différents oxydes telle que décrite précédemment et en particulier à la présence de la phase eutectique ZrO₂-Spinelle entourant des occlusions de zircone ou de spinelle, de préférence de zircone. Grâce à une telle microstructure, il devient possible d'utiliser des matériaux comprenant de très forts taux de zircone, tout particulièrement pour la fabrication de matériaux réfractaires.

## Revendications

1. Grains fondus dans lesquels :
- lesdits grains comprennent une matrice de l'eutectique zircone-spinelle enrobant des inclusions constituées essentiellement d'une phase zircone ou d'une phase spinelle,
- lesdits grains présentent la composition chimique globale suivante, en pourcentages poids exprimés sous la forme d'oxydes :
o plus de 45,0% et moins de 95,0% de ZrO₂,
o plus de 3,0% et moins de 40,0% d'Al₂O₃
o plus de 1,0% et moins de 20,0% de MgO,
ZrO₂, Al₂O₃ et MgO représentent ensemble au moins 95,0% du poids desdits grains.

2. Grains fondus selon la revendication 1, dont la composition chimique comprend plus de 68% poids de ZrO₂.

3. Grains fondus selon l'une des revendications précédentes, dont la composition chimique comprend moins de 25% poids d'Al₂O₃

4. Grains fondus selon l'une des revendications précédentes, dans lequel le rapport massique Al₂O₃/MgO est compris entre 1,0 et 5,0, de préférence est compris entre 1,5 et 3.

5. Grains fondus selon l'une des revendications précédentes, dans lequel ZrO₂, Al₂O₃ et MgO représentent ensemble plus de 98,0% du poids desdits grain.

6. Grains fondus selon l'une des revendications précédentes, comprenant en outre, sur la base de l'oxyde, plus de 0,2% et moins de 4% poids d'Y₂O₃.

7. Grains fondus selon l'une des revendications précédentes, comprenant en outre, sur la base de l'oxyde, plus de 0,2% et moins de 4% poids de CaO.

8. Grains fondus selon l'une des revendications précédentes, dans lesquels plus de 50% des inclusions constituées essentiellement d'oxyde de zirconium, présentent une plus grande dimension inférieure à 500 micromètres.

9. Grains fondus selon l'une des revendications précédentes, dans lesquels la phase spinelle représente entre 5% et 50%, en poids, desdits grains.

10. Grains fondus selon l'une des revendications précédentes, dans lesquels l'eutectique ZrO₂-spinelle représente entre 10% et 80%, en volume, desdits grains.

11. Matériau ou produit céramique réfractaire obtenu par frittage ou consolidation de grains fondus selon l'une des revendications précédentes ou d'un mélange de matières premières comprenant des grains fondus selon l'une des revendications précédentes.

12. Utilisation de grains fondus selon l'une des revendications 1 à 10 pour la fabrication de matériaux réfractaires, dans laquelle :
- lesdits grains comprennent une matrice de l'eutectique zircone-spinelle enrobant des inclusions constituées essentiellement d'une phase zircone ou d'une phase spinelle,
- lesdits grains présentent la composition chimique globale suivante, en pourcentages poids exprimés sous la forme d'oxydes :
∘ plus de 45,0% et moins de 95,0% de ZrO₂,
∘ plus de 3,0% et moins de 40,0% d'Al₂O₃
∘ plus de 1,0% et moins de 20,0% de MgO,
ZrO₂, Al₂O₃ et MgO représentant ensemble au moins 95,0% du poids desdits grains.

13. Utilisation de grains fondus selon la revendication 12, pour la fabrication de matériaux réfractaires pour la métallurgie.

14. Utilisation de grains fondus selon l'une des revendications 12 ou 13 pour la fabrication de matériaux réfractaires, notamment pour la métallurgie, ledit matériau étant obtenu par frittage de matières premières comprenant lesdits grains fondus ou constituées par lesdits grains fondus.

15. Utilisation de grains fondus selon l'une des revendications 12 à 14 pour la fabrication de matériaux réfractaires notamment pour la métallurgie, ledit matériau étant obtenu par consolidation de matières premières comprenant lesdits grains fondus ou constituées par lesdits grains fondus.

16. Utilisation des grains fondus selon l'une des revendications 12 à 15 pour la fabrication de matériaux ou produits réfractaires dans le domaine de la métallurgie, obtenus par frittage ou consolidation de matières premières comprenant une poudre de zircone et une poudre desdits grains fondus, ladite poudre de zircone et ladite poudre de grains fondus représentant ensemble plus de 90% poids desdites matières premières.

## Patentansprüche

1. Kondensierte Körner, wobei:
- die Körner eine Matrix des Zirkonia-Spinell-Eutektikums, das Einschlüsse umgibt, die im Wesentlichen aus einer Zirkonia- oder einer Spinellphase bestehen, umfassen,
- wobei die Körner die folgende chemische Gesamtzusammensetzung in Gewichtsprozent, exprimiert in Form von Oxiden, aufweisen:
∘ mehr als 45,0 % und weniger als 95,0 % ZrO₂,
∘ mehr als 3,0 % und weniger als 40,0 % Al₂O₃
∘ mehr als 1,0 % und weniger als 20,0 % MgO,
ZrO₂, Al₂O₃ und MgO, die zusammen mindestens 95,0 % des Gewichts der Körner darstellen.

2. Kondensierte Körner nach Anspruch 1, deren chemische Zusammensetzung mehr als 68 Gew.-% ZrO₂ umfasst.

3. Kondensierte Körner nach einem der vorhergehenden Ansprüche, deren chemische Zusammensetzung weniger als 25 Gew.-% Al₂O₃ umfasst.

4. Kondensierte Körner nach einem der vorhergehenden Ansprüche, wobei das Gewichtsverhältnis Al₂O₃/MgO zwischen 1,0 und 5,0, vorzugsweise zwischen 1,5 und 3 liegt.

5. Kondensierte Körner nach einem der vorhergehenden Ansprüche, wobei ZrO₂, Al₂O₃ und MgO zusammen mehr als 98,0 % des Gewichts der Körner darstellen.

6. Kondensierte Körner nach einem der vorhergehenden Ansprüche, ferner umfassend auf Oxidbasis mehr als 0,2 und weniger als 4 Gew.-% Y₂O₃.

7. Kondensierte Körner nach einem der vorhergehenden Ansprüche, ferner umfassend auf Oxidbasis mehr als 0,2 und weniger als 4 Gew.-% CaO.

8. Kondensierte Körner nach einem der vorhergehenden Ansprüche, wobei mehr als 50 % der Einschlüsse, die im Wesentlichen aus Zirkoniumoxid bestehen, eine größere Abmessung von weniger als 500 µm aufweisen.

9. Kondensierte Körner nach einem der vorhergehenden Ansprüche, wobei die Spinellphase zwischen 5 und 50 Gew.-% der Körner darstellt.

10. Kondensierte Körner nach einem der vorhergehenden Ansprüche, wobei das ZrO₂-Spineleutektikum zwischen 10 und 80 Vol.-% der Körner darstellt.

11. Material oder feuerfestes Keramikprodukt, erhalten durch Sintern oder Verfestigen von kondensierten Körnern nach einem der vorhergehenden Ansprüche oder einer Rohstoffmischung, umfassend kondensierte Körner nach einem der vorhergehenden Ansprüche.

12. Verwendung von kondensierten Körnern nach einem der Ansprüche 1 bis 10 zur Herstellung von feuerfesten Materialien, wobei:
- die Körner eine Matrix des Zirkonia-Spinell-Eutektikums, das Einschlüsse umgibt,, die im Wesentlichen aus einer Zirkonia- oder einer Spinellphase bestehen, umfassen,
- wobei die Körner die folgende chemische Gesamtzusammensetzung in Gewichtsprozent, exprimiert in Form von Oxiden, aufweisen:
∘ mehr als 45,0 % und weniger als 95,0 % ZrO₂,
∘ mehr als 3,0 % und weniger als 40,0 % Al₂O₃
∘ mehr als 1,0 % und weniger als 20,0 % MgO,
ZrO₂, Al₂O₃ und MgO zusammen mindestens 95,0 % des Gewichts der Körner darstellen.

13. Verwendung von kondensierten Körnern nach Anspruch 12 zur Herstellung von feuerfesten Materialien für die Metallurgie.

14. Verwendung von kondensierten Körnern nach einem der Ansprüche 12 oder 13 zur Herstellung von feuerfesten Materialien, insbesondere für die Metallurgie, wobei das Material durch Sintern von Rohmaterialien erhalten wird, die die kondensierten Körner umfassen oder aus den kondensierten Körnern bestehen.

15. Verwendung von kondensierten Körnern nach einem der Ansprüche 12 bis 14 zur Herstellung von feuerfesten Materialien, insbesondere für die Metallurgie, wobei das Material durch Verfestigen von Rohmaterialien erhalten wird, die die kondensierten Körner umfassen oder aus den kondensierten Körnern bestehen.

16. Verwendung der kondensierten Körner nach einem der Ansprüche 12 bis 15 zur Herstellung von feuerfesten Materialien oder Produkten auf dem Gebiet der Metallurgie, die durch Sintern oder Verfestigen von Rohmaterialien erhalten werden, die ein Pulver aus Zirkona und ein Pulver der kondensierten Körner umfassen, wobei das Pulver aus Zirkona und das Pulver aus kondensierten Körnern zusammen mehr als 90 Gew.-% der Rohmaterialien darstellen.

## Claims

1. Fused grains, in which:
- said grains comprise a matrix of the zirconiaspinel eutectic coating inclusions composed essentially of a zirconia phase or of a spinel phase,
- said grains exhibit the following overall chemical composition, as percentages by weight expressed in the form of oxides:
∘ more than 45.0% and less than 95.0% of ZrO₂,
∘ more than 3.0% and less than 40.0% of Al₂O₃,
∘ more than 1.0% and less than 20.0% of MgO,
ZrO₂, Al₂O₃ and MgO together represent at least 95.0% of the weight of said grains.

2. The fused grains as claimed in claim 1, the chemical composition of which comprises more than 68% by weight of ZrO₂.

3. The fused grains as claimed in either one of the preceding claims, the chemical composition of which comprises less than 25% by weight of Al₂O₃.

4. The fused grains as claimed in one of the preceding claims, in which the Al₂O₃/MgO ratio by weight is between 1.0 and 5.0 and is preferably between 1.5 and 3.

5. The fused grains as claimed in one of the preceding claims, in which ZrO₂, Al₂O₃ and MgO together represent more than 98.0% of the weight of said grains.

6. The fused grains as claimed in one of the preceding claims, additionally comprising, on the basis of the oxide, more than 0.2% and less than 4% by weight of Y₂O₃.

7. The fused grains as claimed in one of the preceding claims, additionally comprising, on the basis of the oxide, more than 0.2% and less than 4% by weight of CaO.

8. The fused grains as claimed in one of the preceding claims, in which more than 50% of the inclusions essentially composed of zirconium oxide exhibit a greater dimension of less than 500 micrometers.

9. The fused grains as claimed in one of the preceding claims, in which the spinel phase represents between 5% and 50% by weight of said grains.

10. The fused grains as claimed in one of the preceding claims, in which the ZrO₂-spinel eutectic represents between 10% and 80% by volume of said grains.

11. A refractory ceramic material or product obtained by sintering or consolidation of fused grains as claimed in one of the preceding claims or of a mixture of starting materials comprising fused grains as claimed in one of the preceding claims.

12. The use of fused grains as claimed in one of claims 1 to 10 for the manufacture of refractory materials, in which:
- said grains comprise a matrix of the zirconia-spinel eutectic coating inclusions composed essentially of a zirconia phase or of a spinel phase,
- said grains exhibit the following overall chemical composition, as percentages by weight expressed in the form of oxides:
∘ more than 45.0% and less than 95.0% of ZrO₂,
∘ more than 3.0% and less than 40.0% of Al₂O₃,
∘ more than 1.0% and less than 20.0% of MgO,
ZrO₂, Al₂O₃ and MgO together representing at least 95.0% of the weight of said grains.

13. The use of fused grains as claimed in claim 12 for the manufacture of refractory materials for metallurgy.

14. The use of fused grains as claimed in either of claims 12 and 13 for the manufacture of refractory materials, in particular for metallurgy, said material being obtained by sintering of starting materials comprising said fused grains or consisting of said fused grains.

15. The use of fused grains as claimed in one of claims 12 to 14 for the manufacture of refractory materials, in particular for metallurgy, said material being obtained by consolidation of starting materials comprising said fused grains or consisting of said fused grains.

16. The use of the fused grains as claimed in one of claims 12 to 15 for the manufacture of refractory materials or products in the field of metallurgy, obtained by sintering or consolidation of starting materials comprising a powder of zirconia and a powder of said fused grains, said powder of zirconia and said powder of fused grains together representing more than 90% by weight of said starting materials.
